# EUROPÄISCHE PATENTSCHRIFT

(11) **EP 3 821 582 B1**
(45) Veröffentlichungstag und Bekanntmachung des Hinweises auf die Patenterteilung: **12.11.2025**
(21) Anmeldenummer: 19745992.8
(22) Anmeldetag: 09.07.2019
(51) Int. Cl.: H04L 9/40, H04L 67/12, H04L 67/00, G05B 19/042, G06F 21/44

(54) **VERFAHREN ZUR EINRICHTUNG EINES BERECHTIGUNGSNACHWEISES FÜR EIN ERSTES GERÄT**
METHOD FOR SETTING UP A PROOF OF AUTHORIZATION FOR A FIRST DEVICE
PROCÉDÉ D'ÉTABLISSEMENT D'UN JUSTIFICATIF D'AUTORISATION POUR UN PREMIER APPAREIL

(30) Priorität: 12.07.2018 DE 102018211597
(43) Veröffentlichungstag der Anmeldung: 19.05.2021
(73) Patentinhaber: Siemens Mobility GmbH, 80997 München (DE)
(72) Erfinder: FALK, Rainer, 85586 Poing (DE)
(74) Vertreter: Siemens Patent Attorneys
(86) Internationale Anmeldenummer: PCT/EP2019/068389
(87) Internationale Veröffentlichungsnummer: WO 2020/011777

(56) Entgegenhaltungen:
- EP-A1- 1 380 907
- DE-A1- 102010 033 231
- DE-A1- 102010 033 232
- DE-A1- 102015 213 412
- US-A1- 2017 366 537

## Beschreibung

Die Erfindung betrifft ein Verfahren zur Einrichtung eines Berechtigungsnachweises für ein erstes Gerät, wobei das erste Gerät mittels Konfigurationsdaten, die von einem lösbar mit dem ersten Gerät verbundenen Konfigurationsmodul auf das erste Gerät übertragen werden, konfiguriert wird, sowie ein erstes Gerät, ein Konfigurationsmodul, eine Berechtigungsvorrichtung sowie ein Computerprogrammprodukt zur Durchführung des Verfahrens.

Geräte, insbesondere Geräte in einem Internet of Things, die mit anderen Geräten oder Steuerungsvorrichtungen Daten über Kommunikationsverbindungen austauschen, werden in privaten Netzwerken und insbesondere auch in industriellen Anlagen eingesetzt. Um eine hohe Verfügbarkeit, insbesondere in Automatisierungsanlagen, zu erreichen, ist es erforderlich, defekte Geräte schnell austauschen zu können. Dabei muss ein Ersatzgerät mit den gleichen Einstellungen konfiguriert werden. Um ein schnelles Übernehmen einer Gerätekonfiguration zu ermöglichen, ist es bekannt, die zum Konfigurieren des Gerätes benötigten Konfigurationsdaten auf einem Speichermodul, beispielsweise auf einem USB-Stick, einer SD-Karte oder einem C-Plug zu speichern. Bei einem Gerätetausch muss dann lediglich ein solches Speichermodul, das im Weiteren als Konfigurationsmodul bezeichnet wird, des defekten Gerätes gegen ein neues Gerät eingesteckt werden. Dadurch erscheint das neue Gerät als das alte Gerät und wird innerhalb des Automatisierungsnetzes damit auch als das alte Gerät erkannt.

Die DE 10 2010 033231 A1 offenbart ein Verfahren zum manipulationssicheren Bereitstellen eines Schlüssel-Zertifikats für einen öffentlichen Geräteschlüssel eines Nutzer-Gerätes, das bei einem Nutzer installiert wird, durch einen Server eines Dienstleitungsanbieters, der dem Nutzer über das Nutzer-Gerät eine Dienstleistung zur Verfügung stellt. Dabei wird durch das Nutzer-Gerät eine Signierungsanforderungsnachricht für einen lokal erzeugten öffentlichen Geräteschlüssel gebildet und zusammen mit einem aus einem Datenträger ausgelesenen Einmalpasswort OTP des Nutzer-Gerätes von dem Nutzer-Gerät an den Server des Dienstleistungsanbieters übertragen. Die gebildete Signierungsanforderungsnachricht wird durch den Server anhand des in dem Datenspeicher des Servers für das Nutzer-Gerät gespeicherten Einmalpasswortes OTP verifiziert. Anschließend stellt der Server ein Schlüssel-Zertifikat für dem öffentlichen Geräte-Schlüssel des Nutzer-Gerätes bereit.

Aus Sicherheitssicht ist ein solcher Gerätetausch jedoch unzureichend, da das alte und das neue Gerät im Betrieb nicht unterschieden werden können. Auch können äußerst sensible Sicherheitskonfigurationsdaten, insbesondere ein Gerätebetreiber-Zertifikat und ein zugeordneter private Geräteschlüssel auf dem Konfigurationsmodul abgelegt werden. Diese sensiblen Sicherheitskonfigurationsdaten sind dabei entweder im Klartext oder gegebenenfalls mit einem Geräte übergreifenden Gruppenschlüssel verschlüsselt.

Es ist die Aufgabe der vorliegenden Erfindung, ein Verfahren zu schaffen, mit dem Geräte, die über ein Konfigurationsmodul also mit den gleichen Konfigurationsdaten konfiguriert werden, zuverlässig im Betrieb unterschieden werden können.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zur Einrichtung eines Berechtigungsnachweises für ein erstes Gerät, wobei das erste Gerät mittels Konfigurationsdaten, die von einem lösbar mit dem ersten Gerät verbundenen Konfigurationsmodul auf das erste Gerät übertragen werden, konfiguriert wird. Das Verfahren weist folgende Verfahrensschritte auf:
- Erkennen eines Verbindens eines Konfigurationsmoduls mit dem ersten Gerät,
- Auslesen einer Konfigurationsmodul-spezifischen Geräteinformation aus dem Konfigurationsmodul,
- Anfordern eines Konfigurationsmodul-spezifischen Berechtigungsnachweises für die Konfigurationsmodul-spezifische Geräteinformation für das erste Gerät bei einer Berechtigungsvorrichtung, und
- Abspeichern des von der Berechtigungsvorrichtung angeforderten konfigurationsspezifischen Berechtigungsnachweises auf einer Sicherheitsspeichereinheit des ersten Geräts.

Mit dem Verbinden des Konfigurationsmoduls mit dem ersten Gerät wird somit das Anfordern und Zuteilen eines Berechtigungsnachweises für das Gerät ausgelöst, der die auf dem Konfigurationsmodul abgespeicherten Geräteinformationen berücksichtigt. Durch das Abspeichern des Konfigurationsmodul-spezifischen Berechtigungsnachweises auf der Sicherheitsspeichereinheit des ersten Gerätes kann der Konfigurationsmodul-spezifische Berechtigungsnachweis und/oder damit verbundene kryptographische Schlüssel besser geschützt werden, da ein Gerät oftmals über eine spezielle Sicherheitsspeichereinheit oder einen speziellen Sicherheitsspeicherbereich verfügt, die bzw. der zusätzliche Sicherheitsmaßnahmen aufweist. Beispielsweise kann ein Auslesen des Speichers durch Tamperschutzmaßnahmen erschwert oder verhindert werden oder es kann ein Eindringen in die Sicherheitsspeichereinheit erkannt werden und die darin gespeicherten Daten gelöscht werden.

In einer vorteilhaften Ausführungsform umfasst das Verfahren einen weiteren Verfahrensschritt, nämlich ein Überprüfen, ob ein Konfigurationsmodul-spezifischer Berechtigungsnachweis für die konfigurationsspezifische Geräteinformation auf dem ersten Gerät bereits vorhanden ist und einem Anfordern des Konfigurationsmodul-spezifischen Berechtigungsnachweises lediglich dann, wenn der Konfigurationsmodul-spezifische Berechtigungsnachweis für die konfigurationsspezifische Geräteinformation auf dem ersten Gerät fehlt. Das Überprüfen kann beispielsweise bei einem Gerätestart (Booten) und/oder bei einem Anstecken eines Konfigurationsmoduls erfolgen.

Somit wird lediglich dann ein Berechtigungsnachweis angefordert, wenn das Verbinden eines "neuen Konfigurationsmoduls", das heißt eines Konfigurationsmoduls mit einer vom vorherigen Konfigurationsmodul unterschiedlichen Konfigurationsmodul-spezifischen Geräteinformation, erkannt wird. Damit können Anforderungsnachrichten reduziert werden und somit Rechenkapazität des ersten Gerätes und Übertragungskapazität eines Übertragungsnetzes zur Berechtigungsvorrichtung eingespart beziehungsweise optimiert werden.

Gemäß der Erfindung wird der Konfigurationsmodul-spezifische Berechtigungsnachweis vom Gerät zur Authentifizierung des Geräts gegenüber einem Kommunikationspartner verwendet.

Der Konfigurationsmodul-spezifische Berechtigungsnachweis selbst kann vom Gerät an den Kommunikationspartner zur Authentisierung übermittelt werden. In einer Variante kann abhängig vom Konfigurationsmodul-spezifischen Berechtigungsnachweis ein Authentisierungsparameter durch das Gerät gebildet und an einen Kommunikationspartner zur Authentifizierung des Gerätes übermittelt werden. Der Authentisierungsparameter kann mittels eines dem Konfigurationsmodul-spezifischen Berechtigungsnachweises zugeordneten kryptographischen Schlüssels gebildet werden.

Mit dem Konfigurationsmodul-spezifischen Berechtigungsnachweis kann sich das Gerät als ein entsprechend den Konfigurationsdaten des Konfigurationsmoduls konfiguriertes Gerät authentisieren und vom Kommunikationspartner authentifiziert werden. Da das erste Gerät den Konfigurationsmodul-spezifischen Berechtigungsnachweis anfordert, enthält der Konfigurationsmodul-spezifischen Berechtigungsnachweis auch eine Kennung des ersten Gerätes selbst. Damit ist eine Unterscheidung des ersten Gerätes von einem zweiten Gerät, das mit dem gleichen Konfigurationsmodul beispielsweises zu einem anderen Zeitpunkt konfiguriert ist, möglich.

In einer vorteilhaften Ausführungsform umfasst das Verfahren einen weiteren Verfahrensschritt, nämlich ein Widerrufen des Konfigurationsmodul-spezifischen Berechtigungsnachweises nach einem Trennen des Konfigurationsmoduls vom ersten Gerät.

Dadurch wird sichergestellt, dass dieser Konfigurationsmodul-spezifischen Berechtigungsnachweis, der von einem bestimmten Gerät angefordert wurde, nach dem Trennen des Konfigurationsmoduls vom Gerät nicht länger als gültig anerkannt wird. Damit ist sichergestellt, dass ein erstes Gerät, von dem das Konfigurationsmodul entfernt wurde, sich nicht mehr mit diesem Konfigurationsmodul-spezifischen Berechtigungsnachweis, das ja auf dem ersten Gerät selbst abgespeichert ist und somit dem ersten Gerät weiter zur Verfügung steht, authentisieren kann.

In einer vorteilhaften Ausführungsform ist die Konfigurationsmodul-spezifischen Geräteinformation eine auf dem Konfigurationsmodul gespeicherte Gerätekennung oder eine auf dem Konfigurationsmodul gespeicherte Konfigurationsmodulkennung.

Somit wird ein Konfigurationsmodul-spezifischer Berechtigungsnachweis flexibel für eine die Konfiguration bestimmende Kennung angefordert. Die gespeicherte Gerätekennung kann beispielsweise ein projektierter Gerätename sein, für den die Konfiguration vorgesehen ist. Eine Konfigurationsmodulkennung kann aber auch eine Zeichenkette sein, die einen Aufgabenbereich, den ein entsprechend konfiguriertes Gerät ausführt, bspw. eine Steuerungskontrolle, sein. Des Weiteren kann beispielsweise eine Prüfsumme, eine Versionsinformation, ein kryptographischer Hash-Wert der auf dem Konfigurationsmodul gespeicherten Gerätekonfiguration als Konfigurationsmodulkennung durch das erste Gerät gebildet werden.

In einer vorteilhaften Ausführungsform ist der Konfigurationsmodul-spezifische Berechtigungsnachweis als ein digitales Zertifikat oder als Zugangs-Token in Java Script Object Notation (JSON) ausgebildet.

Dies hat den Vorteil, dass ein solches digitales Zertifikat beispielsweise entsprechend dem ITU-T Standard X.509 oder als JSON-Token zur Authentifizierung in häufig verwendeten Protokollen zum Verbindungsaufbau verwendet werden kann.

Erfindungsgemäß ist im Konfigurationsmodul-spezifischen Berechtigungsnachweis zusätzlich eine im ersten Gerät vorliegende Gerätespezifische Gerätekennung enthalten.

Dies hat den Vorteil, dass im Berechtigungsnachweis selbst eine Verknüpfung zwischen einer Konfigurationsmodul-spezifischen Geräteinformation und dem Gerät, das die Anforderungsnachricht sendet, vorliegt. Der Berechtigungsnachweis gibt somit eindeutig Auskunft über das tatsächliche Gerät, welches den Konfigurationsmodul-spezifischen Berechtigungsnachweis anfordert.

In einer vorteilhaften Ausführungsform wird eine Adresse der Berechtigungsvorrichtung, von der ein Konfigurationsmodul-spezifischer Berechtigungsnachweis angefordert wird, auf dem Konfigurationsmodul gespeichert und von dort dem ersten Gerät bereitgestellt.

Dies hat den Vorteil, dass das erste Gerät eine Anfragenachricht und insbesondere auch eine Nachricht zum Widerrufen des Konfigurationsmodul-spezifischen Berechtigungsnachweises an die gleiche Berechtigungsvorrichtung senden kann. Damit ist eine schnelle Anforderung, aber auch Widerrufung, des Berechtigungsnachweises möglich.

In einer vorteilhaften Ausführungsform wird eine Anforderungsnachricht zum Anfordern des Konfigurationsmodul-spezifischen Berechtigungsnachweises mit einem vom ersten Gerät erzeugten, für das Konfigurationsmodul spezifischen, privaten Konfigurationsschlüssel kryptographisch geschützt.

Das Gerät kann also ein Konfigurationsmodul-spezifisches Schlüsselpaar, umfassend einen privaten Konfigurationsschlüssel und einen öffentlichen Konfigurationsschlüssel, generieren. Dieses Schlüsselpaar ist spezifisch für die Kombination aus Gerät und Konfigurationsmodul. Daher kann es als Konfigurationsmodul-spezifisches Geräteschlüsselpaar bezeichnet werden. Der öffentliche Konfigurationsschlüssel ist dabei in der Anforderungsnachricht enthalten. Dadurch ist gewährleistet, dass das Gerät über den privaten Konfigurationsschlüssel verfügt, der zu dem in der Anforderungsnachricht enthaltenen öffentlichen Geräteschlüssel gehört.

In einer vorteilhaften Ausführungsform wird eine Anforderungsnachricht zum Anfordern des Konfigurationsmodul-spezifischen Berechtigungsnachweises mit einem im ersten Gerät vorliegenden Geräte-spezifischen privaten Schlüssel kryptographisch geschützt.

Der Geräte-spezifische private Schlüssel und ein zugeordneter Geräte-spezifischer Berechtigungsnachweis können ein Herstellerschlüssel und ein Herstellerzertifikat des Geräts sein.

Ein Schutz einer Anforderungsnachricht kann durch die Signatur der Anforderungsnachricht mit einem oder mehreren der genannten Schlüssel oder mit der Bildung einer kryptographischen Nachrichtenauthentisierungsnachricht mit einem oder mehreren der genannten Schlüssel oder durch Übertragung über einem kryptographisch geschützten Kommunikationskanal, dessen Aufbau mit einem oder mehreren der genannten Schlüssel authentisiert ist, realisiert sein.

In einer vorteilhaften Ausführungsform wird beim Erkennen eines Trennens des Konfigurationsmoduls vom ersten Gerät eine Widerrufanfrage zum Widerrufen des Konfigurationsmodul-spezifischen Berechtigungsnachweises vom ersten Gerät erzeugt und an die Berechtigungsvorrichtung übermittelt.

Dies hat den Vorteil, dass bereits mit dem Trennen des Konfigurationsmoduls vom ersten Gerät selbst der Berechtigungsnachweis widerrufen wird und somit nicht länger als gültig von einem Kommunikationspartner akzeptiert wird.

In einer vorteilhaften Ausführungsform wird nach dem Abspeichern des Konfigurationsmodul-spezifischen Berechtigungsnachweises auf dem ersten Gerät eine Widerrufsinformation dem Konfigurationsmodul bereitgestellt und bei einem Erkennen eines Verbindens des Konfigurationsmoduls mit einem zweiten Gerät wird abhängig von der bereitgestellten Widerrufsinformation das Widerrufen des Konfigurationsmodul-spezifischen Berechtigungsnachweises des ersten Gerätes durch das zweite Gerät unter Verwendung der bereitgestellten Widerrufsinformation ausgelöst.

Dies hat den Vorteil, dass das zweite Gerät das Widerrufen auslöst beziehungsweise eine Widerrufsnachricht an die Berechtigungsvorrichtung sendet. Dies ist insbesondere dann vorteilhaft, wenn das erste Gerät wegen eines Defektes ausgetauscht wird und keine Widerrufsnachricht beim Lösen des Konfigurationsmoduls vom ersten Gerät senden kann. Da eine solche Widerrufsnachricht beim Erkennen eines Verbindens des Konfigurationsmoduls mit dem zweiten Gerät erfolgt, ist sichergestellt, dass lediglich ein konfigurationsspezifischer Berechtigungsnachweis gültig existiert, wenn ein Gerät tatsächlich über das Konfigurationsmodul konfiguriert ist.

In einer alternativen vorteilhaften Ausführungsform übermittelt das zweite Gerät eine von der Widerrufsinformation abhängige Autorisierungsinformation mit einer Anforderungsnachricht zum Anfordern eines Konfigurationsmodul-spezifischen Berechtigungsnachweises für das zweite Gerät an die Berechtigungsvorrichtung, woraufhin die Berechtigungsvorrichtung abhängig von der Autorisierungsinformation den Konfigurationsmodul-spezifischen Berechtigungsnachweis des ersten Gerätes widerruft.

Dies hat den Vorteil, dass keine gesonderte Widerrufnachricht vom zweiten Gerät erstellt und gesendet werden muss. Stattdessen kann über die Anforderungsnachricht ein Widerrufen des Konfigurationsmodul-spezifischen Berechtigungsnachweises des ersten Gerätes initiiert werden.

In einer vorteilhaften Ausführungsform wird die Gültigkeitsdauer des Konfigurationsmodul-spezifischen Berechtigungsnachweises auf eine vorgegebene Anzahl von Stunden, bevorzugt auf einen Tag, begrenzt und nach Ablauf der Gültigkeitsdauer wird vom ersten Gerät ein neuer Konfigurationsmodul-spezifischer Berechtigungsnachweis angefordert.

Dies hat den Vorteil, dass zwei Konfigurationsmodul-spezifische Berechtigungsnachweise für das gleiche Konfigurationsmodul maximal für eine Zeitspanne von einer Gültigkeitsdauer existieren. Die Gültigkeitsdauer kann dabei auf den Einsatz des Gerätes und die Häufigkeit eines Konfigurationsmodulwechsels und die Häufigkeit von aufgebauten Kommunikationsverbindungen und somit der Verwendung des Berechtigungsnachweises angepasst werden.

Sofern es in der nachfolgenden Beschreibung nicht anders angegeben ist, beziehen sich die Begriffe "Erkennen eines Verbinden", "Auslesen", "Anfordern", "Abspeichern", "Überprüfen", "Widerrufen", "Zuordnen" und dergleichen vorzugsweise auf Handlungen und/oder Prozesse und/oder Verarbeitungsschritte, die Daten verändern und/oder erzeugen und/oder die Daten in andere Daten überführen, Daten zu Nachrichten zusammengefasst und übermittelt werden, wobei die Daten insbesondere als physikalische Größen dargestellt werden oder vorliegen können, beispielsweise als elektrische Impulse.

Ein zweiter Aspekt der Erfindung betrifft ein erstes Gerät, das mittels Konfigurationsdaten, die von einem lösbar mit dem ersten Gerät verbundenen Konfigurationsmodul auf das erste Gerät übertragen werden, konfigurierbar ist, aufweisend
- eine Verbindungseinheit, die derart ausgebildet ist, ein Verbinden Konfigurationsmodul mit dem ersten Gerät zu erkennen,
- eine Ausleseeinheit, die derart ausgebildet ist, eine konfigurationsspezifische Geräteinformation aus dem Konfigurationsmodul auszulesen,
- eine Steuerungseinheit, die derart ausgebildet ist, einen Konfigurationsmodul-spezifischen Berechtigungsnachweis für die konfigurationsspezifische Geräteinformation für das erste Gerät bei einer Berechtigungsvorrichtung anzufordern, und eine
- Sicherheitsspeichereinheit, die derart ausgebildet ist, den von der Berechtigungsvorrichtung angeforderten Konfigurationsmodul-spezifischen Berechtigungsnachweis abzuspeichern, wobei im Konfigurationsmodul-spezifischen Berechtigungsnachweis (C-Kn) zusätzlich eine im ersten Gerät (FD1) vorliegende Gerätespezifische Gerätekennung (FD1-ID) enthalten ist, wobei das erste Gerät (FD) den Konfigurationsmodul-spezifischen Berechtigungsnachweis (C-Kn) zur Authentifizierung des ersten Geräts (FD) gegenüber einem Kommunikationspartner (BS) verwendet.

Unter einer "Einheit" kann im Zusammenhang mit der Erfindung beispielsweise ein Prozessor und/oder eine Speichereinheit zum Abspeichern von Programmbefehlen oder Daten verstanden werden. Eine "Einheit" kann zum Beispiel hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Das erste Gerät ist dabei derart ausgebildet, das vorangehend beschriebene Verfahren auszuführen.

Ein dritter Aspekt, der nicht Teil der Erfindung ist, betrifft ein Konfigurationsmodul zum Konfigurieren eines ersten Gerätes, das derart ausgebildet ist, das vorgenannte Verfahren auszuführen. Das Konfigurationsmodul ist insbesondere als hardwaretechnische Einheit anzusehen, die physisch von einem ersten Gerät getrennt beziehungsweise mit einem ersten oder zweiten Gerät verbindbar ist. Das Konfigurationsmodul umfasst eine Speichereinheit, auf der die Konfigurationsdaten sowie im vorhergehenden Verfahren genannte Informationen speicherbar aber auch auslesbar sind. Das Konfigurationsmodul kann auch als softwaretechnische Einheit ausgeführt sein und beispielsweise als Konfigurations-Datenpaket oder Konfigurations-Computerprogrammprodukt von einem Computer oder Server auf ein Gerät ladbar sein.

Ein vierter Aspekt, der nicht Teil der Erfindung ist, betrifft eine Berechtigungsvorrichtung zur Einrichtung eines Berechtigungsnachweises für ein erstes Gerät, wobei das erste Gerät mittels Konfigurationsdaten, die von einem lösbar mit einem ersten Gerät verbundenen Konfigurationsmodul auf das erste Gerät übertragen werden, konfiguriert wird, die derart ausgebildet ist, das beschriebene Verfahren auszuführen.

In einem fünften Aspekt betrifft die Erfindung ein Computerprogrammprodukt, das direkt in einen Speicher eines digitalen Computers ladbar ist, umfassend Programmcodeteile, die dazu geeignet sind, die Schritte des beschriebenen Verfahrens durchzuführen.

Ein Computerprogrammprodukt, wie zum Beispiel ein Computerprogramm-Mittel, kann beispielsweise als Speichermedium, wie zum Beispiel einer Speicherkarte, einem USB-Stick, eine CD-ROM, eine DVD oder auch in Form einer herunterladbaren Datei von einem Server in einem Netzwerk bereitgestellt oder geliefert werden.

Ausführungsbeispiele des erfindungsgemäßen Verfahrens, des ersten Gerätes, der Berechtigungsvorrichtung sowie des Konfigurationsmoduls sind in den Zeichnungen beispielhaft dargestellt und werden anhand der nachfolgenden Beschreibung näher erläutert. Es zeigen:
- Figur 1: ein Anwendungsszenario für das erfindungsgemäße Verfahren mit einem Ausführungsbeispiel der erfindungsgemäßen Berechtigungsvorrichtung und ersten Geräten in schematischer Darstellung;
- Figur 2A: ein erstes Ausführungsbeispiel des erfindungsgemäßen Verfahrens als Ablaufdiagramm;
- Figur 2B: ein zweites Ausführungsbeispiel des erfindungsgemäßen Verfahrens mit einer weiteren Widerrufsvariante des Konfigurationsmodul-spezifischen Berechtigungsnachweises als Nachrichtenablaufdiagramm;
- Figur 2C: ein drittes Ausführungsbeispiel des erfindungsgemäßen Verfahrens mit einer weiteren Widerrufsvariante des Konfigurationsmodul-spezifischen Berechtigungsnachweises als Nachrichtenablaufdiagramm;
- Figur 3: ein Ausführungsbeispiel eines erfindungsgemäßen Konfigurationsmoduls in Blockdarstellung; und
- Figur 4: ein Ausführungsbeispiel eines erfindungsgemäßen ersten Gerätes in Blockdarstellung;

Einander entsprechende Teile sind in allen Figuren mit den gleichen Bezugszeichen versehen.

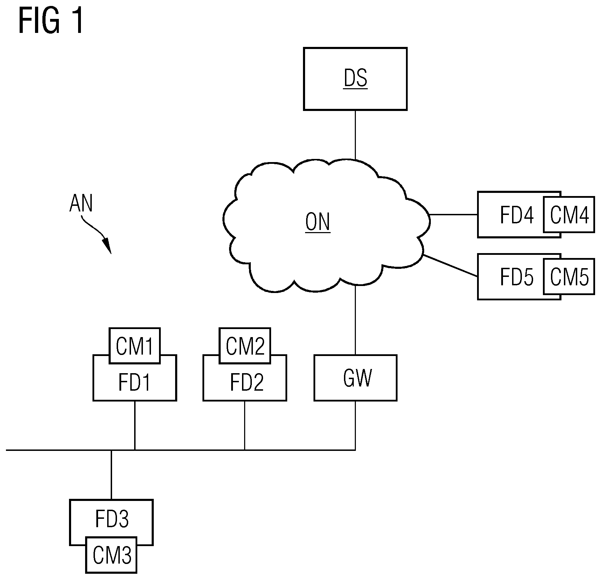

Figur 1 zeigt als Anwendungsszenario für das erfindungsgemäße Verfahren ein Kommunikationsnetzwerk AN, beispielsweise eine Automationsanlage, mit mehreren Geräten, FD1, FD2, FD3, FD4, FD5 und einem Gateway GW, die über ein offenes Netzwerk ON mit einem Dienstserver DS verbunden sind. Die Geräte FD1, FD2, FD3, FD4, FD5 sind jeweils mit einem Konfigurationsmodul CM1, CM2, CM3, CM4, CM5 verbunden, auf dem die aktuellen Konfigurationsdaten des jeweiligen Gerätes FD1, FD2, FD3, FD4, FD5 abgespeichert sind, um das Gerät FD1, FD2, FD3, FD4, FD5 bei einem Defekt einfach durch ein Ersatzgerät ersetzten zu können. Ein Ersatzgerät muss nicht explizit konfiguriert werden, sondern es genügt, das Konfigurationsmodul aus dem defekten Gerät abzuziehen und in das neue Gerät einzustecken.

Die Kernidee der Erfindung besteht nun darin, dass nach dem Erkennen eines Verbindens eines Konfigurationsmoduls mit einem Gerät, das Gerät einen Konfigurationsmodul-spezifischen Berechtigungsnachweis, beispielsweise ein Gerätezertifikat oder ein JSON-Token, anfordert und erhält, indem als Gerätename eine in dem Konfigurationsmodul angegebene Konfigurationsmodul-spezifische Geräteinformation enthalten ist, die durch das aktuell mit dem Gerät verbundene Konfigurationsmodul definiert ist. Das Gerät FD1 erkennt das Verbinden der Konfigurationsmoduls CM1 mit dem Gerät FD1 beispielsweise dadurch, dass das Konfigurationsmodul CM1 am ersten Gerät FD1 angesteckt wurde, also ein elektrischer Kontakt zwischen dem Konfigurationsmodul CM1 und dem ersten Gerät FD1 hergestellt wurde und Daten in Form von elektrischen Signalen übertragen werden.

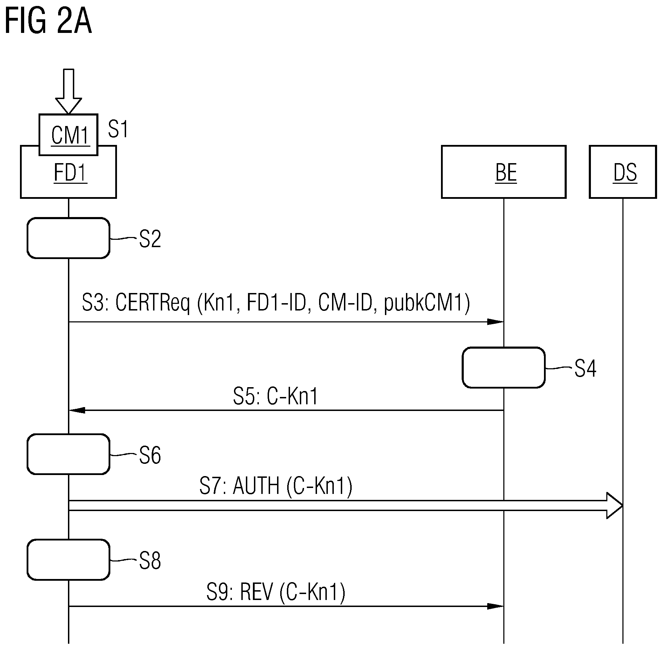

Figur 2A zeigt das Verfahren als Nachrichtenablaufdiagramm. In einem ersten Verfahrensschritt S1 erkennt das erste Gerät FD1, dass das Konfigurationsmodul CM1 mit einem ersten Gerät FD1 verbunden wurde. Im Verfahrensschritt S2 wird durch das Gerät FD1 mindestens eine Konfigurationsmodul-spezifische Geräteinformation Kn1 vom Konfigurationsmodul CM1 ausgelesen.

Nach dem Auslesen der Konfigurationsmodul-spezifischen Geräteinformation Kn1 generiert das erste Gerät FD1 beispielsweise ein neues Konfigurationsschlüsselpaar umfassend einen öffentlichen Konfigurationsschlüssel pubkCM1 und einen dazugehörigen privaten Konfigurationsschlüssel privkCM1, entsprechend einer öffentlichen Schlüsselinfrastruktur (PKI). Das erste Gerät bildet eine Zertifikatanfragenachricht CERTReq, die den erzeugten öffentlichen Schlüssel pubkCM1, eine Konfigurationsmodul-spezifische Geräteinformation Kn1, sowie eine im ersten Gerät FD1 enthaltene Gerätekennung FD1-ID, umfasst. Die Konfigurationsmodul-spezifische Geräteinformation Kn1 ist beispielsweise eine auf dem Konfigurationsmodul gespeicherte Gerätekennung Gn, insbesondere ein projektierter Gerätename. Die Konfigurationsmodul-spezifische Geräteinformation Kn1 kann auch eine auf dem Konfigurationsmodul CM1 gespeicherte Konfigurationsmodulkennung KDI sein.

In einer Variante wird zusätzlich eine Identifizierungsinformation des Konfigurationsmoduls CM-ID in die Zertifikatanfragenachricht CERTReq eingetragen. Die Identifizierungsinformation des Konfigurationsmoduls CM-ID kann beispielsweise eine Seriennummer des Konfigurationsmoduls sein und/oder eine Identifizierungsinformation sein, die die auf dem Konfigurationsmodul gespeicherte Konfigurationsdaten identifiziert, beispielsweise ein Hashwert oder eine Versionsangabe der Konfigurationsdaten.

Die Zertifikatanfragenachricht CERTReq kann mehrfach kryptographisch geschützt werden. Zum einen wird die Anforderungsnachricht CERTReq mit dem privaten Konfigurationsschlüssel privkCM1, der beim Verbinden des Konfigurationsmoduls mit dem ersten Gerät erzeugt wurde, signiert. Dadurch kann überprüft werden, ob das sendende Gerät FD1 tatsächlich über den privaten Schlüssel privkCM1 verfügt. Des Weiteren kann die Anfragenachricht CERTReq mit einem im ersten Gerät vorliegenden Geräte-spezifischen privaten Geräteschlüssel privkFD1, dem ein Geräte-spezifischer Berechtigungsnachweis C-FD1, zugeordnet ist, digital signiert werden. Dieser im Gerät vorliegende Geräte-spezifische Berechtigungsnachweis C-FD1 kann beispielsweise ein Herstellerzertifikat des ersten Gerätes FD1, der Geräte-spezifischen privaten Geräteschlüssel privkFD1 ein privater Hersteller-Schlüsselsein. Dadurch ist eindeutig überprüfbar, von welchem Gerät die Anfragenachricht CERTReq gestellt wird.

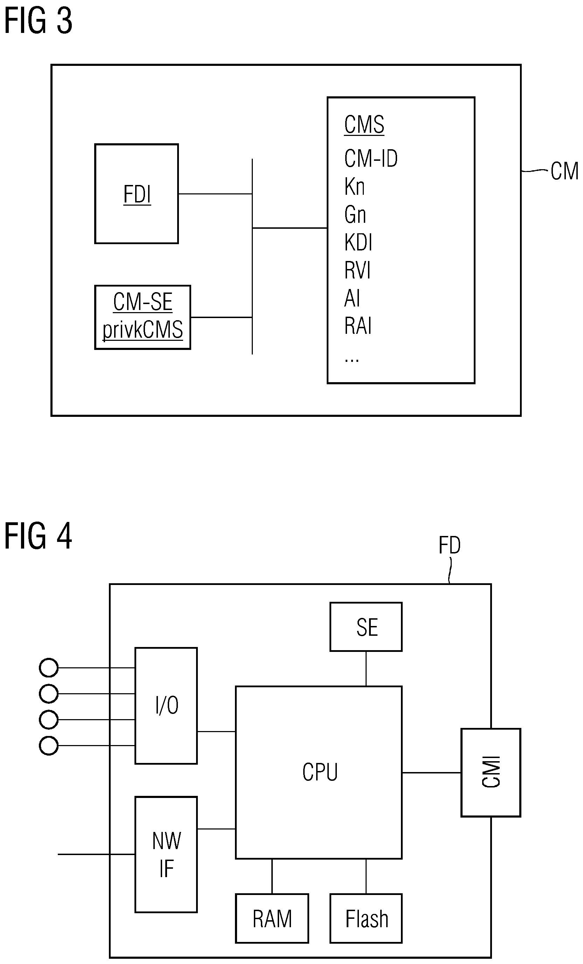

Weiterhin ist es möglich, dass die Zertifikatanfragenachricht CERTReq zusätzlich mit einem privaten Schlüssel des Konfigurationsmoduls signiert wird. Dazu ist ein privater Konfigurationsmodulauthentisierungsschlüssel privkCMS auf dem Konfigurationsmodul CM gespeichert, siehe Fig. 3. In einer Variante verfügt das Konfigurationsmodul CM über ein Sicherheitselement CM-SE, um eine digitale Signatur mittels des auf dem Konfigurationsmodul CM gespeicherten privaten Konfigurationsmodulauthentisierungsschlüssels privkCMS zu bilden. Das erste Gerät FD1 überträgt eine Signaturanforderung abhängig von der gebildeten Zertifikatsanfragenachricht an das Konfigurationsmodul CM. Das Konfigurationsmodul stellt die gebildete Signatur dem ersten Gerät FD1 bereit. In einer anderen Variante ist der private Konfigurationsmodulauthentisierungsschlüssel privkCMS1 durch das erste Gerät FD1 aus dem Konfigurationsmodul CM1 auslesbar, sodass das erste Gerät FD1 selbst die Signatur bilden kann.

Die signierte Anfragenachricht CERTReq wird nun zusammen mit beispielsweise einer Registrierungsautorisierungsinformation des Konfigurationsmoduls CM an die Berechtigungsvorrichtung BE übertragen. Die Registrierungsautorisierungsinformation kann durch das erste Gerät FD1 vom Konfigurationsmodul CM ausgelesen werden (z.B. ein Passwort, ein PIN-Code, ein JSON Web Token). Die Berechtigungsvorrichtung BE prüft die Anfragenachricht, siehe S4, und stellt den konfigurationsspezifischen Berechtigungsnachweis C-Kn, entsprechend der Anfragenachricht CERTReq aus und stellt den Konfigurationsmodul-spezifischen Berechtigungsnachweis C-Kn1, beispielsweise als digitales Zertifikat, dem ersten Gerät FD1 bereit, siehe S5.

Das erste Gerät FD1 speichert den ausgestellten Konfigurationsmodul-spezifischen Berechtigungsnachweis C-Kn1, siehe S6, und kann nun den Konfigurationsmodul-spezifischen Berechtigungsnachweis C-Kn1 verwenden, um sich gegenüber anderen Geräten FD2, FD3, FD4, FD5, dem Gateway GW oder einem Dienstserver DS zu authentisieren, siehe S7.

Wird das Konfigurationsmodul CM1 vom ersten Gerät FD1 getrennt, siehe S8, so wird bevorzugt eine Widerrufsnachricht REVzum Widerrufen des Konfigurationsmodul-spezifischen Berechtigungsnachweises C-Kn1 an die Berechtigungsvorrichtung BE vom ersten Gerät FD1 gesendet, siehe S9. Die Berechtigungsvorrichtung BE widerruft daraufhin den Konfigurationsmodul-spezifischen Berechtigungsnachweis C-Kn1.

Zusätzlich oder alternativ zum oben beschriebenen Widerrufen des Konfigurationsmodul-spezifischen Berechtigungsnachweis C-Kn1, kann vom ersten Gerät FD1 eine Widerrufsinformation RVI, die bevorzugt den Konfigurationsmodul-spezifischen Berechtigungsnachweis C-Kn1 des ersten Gerätes FD1 kennzeichnet, dem Konfigurationsmodul CM1 bereitgestellt werden. Das heißt, diese Widerrufsinformation RVI wird auf dem Konfigurationsmodul CM1 gespeichert. Dies kann beispielsweise im Verfahrensschritt S6 durchgeführt werden.

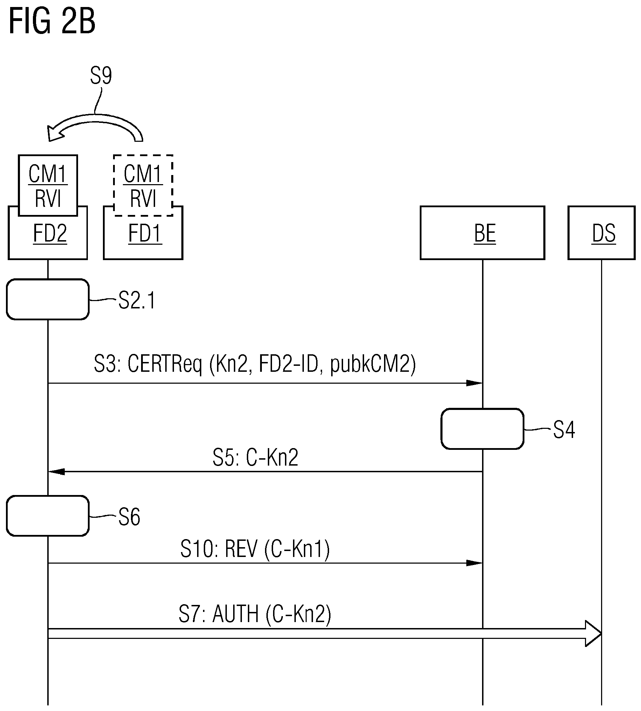

In Figur 2B ist nun der Nachrichtenablauf beim Wechsel des Konfigurationsmoduls CM1 beispielsweise vom ersten Gerät FD1 auf ein zweites Gerät FD2 dargestellt.

Beim Wechsel des Konfigurationsmoduls CM1 beispielsweise vom ersten Gerät FD1 auf ein zweites Gerät FD2werden nach dem Verbinden des Konfigurationsmoduls CM1 mit dem zweiten Gerät FD2, siehe S9, die Konfigurationsdaten und die Widerrufsinformation RVI vom Konfigurationsmodul CM1 dem zweiten Gerät FD2 bereitgestellt und dort empfangen, siehe Verfahrensschritte S2.1. Das zweite Gerät FD2 fordert einen neuen Konfigurationsmodul-spezifischen Berechtigungsnachweis C-Kn2 bei der Berechtigungsvorrichtung BE entsprechend den in Figur 2A dargestellten und beschrieben Verfahrensschritten S3, S4, S5 an und speichert diesen im zweiten Gerät FD1 ab, siehe S6.

Das zweite Gerät FD2 kann nun anhand der Widerrufsinformation RVI eine Widerufsnachricht REV an die Berechtigungsvorrichtung BE, die vorzugsweise ebenfalls durch eine Information aus dem Konfigurationsmodul CM1 identifiziert wird, widerrufen, siehe S10. Der Konfigurationsmodul-spezifische Berechtigungsnachweis C-Kn1, der für das erste Gerät FD1 ausgestellt wurde, ist nun widerrufen und somit nicht mehr gültig. Der Verfahrensschritt S10 kann auch zu einem früheren Zeitpunkt, beispielsweise vor dem Anfordern eines neuen Konfigurationsmodul-spezifischen Berechtigungsnachweises, siehe Verfahrensschritt S3, oder vor der Übermittlung des Konfigurationsmodul-spezifischen Berechtigungsnachweises für das zweite Gerät FD2, siehe Verfahrensschritt S5, ausgeführt werden. Anschließend authentisiert sich das zweite Gerät FD2 mittels des Konfigurationsmodul-spezifischen Berechtigungsnachweis C-Kn2, siehe S7.

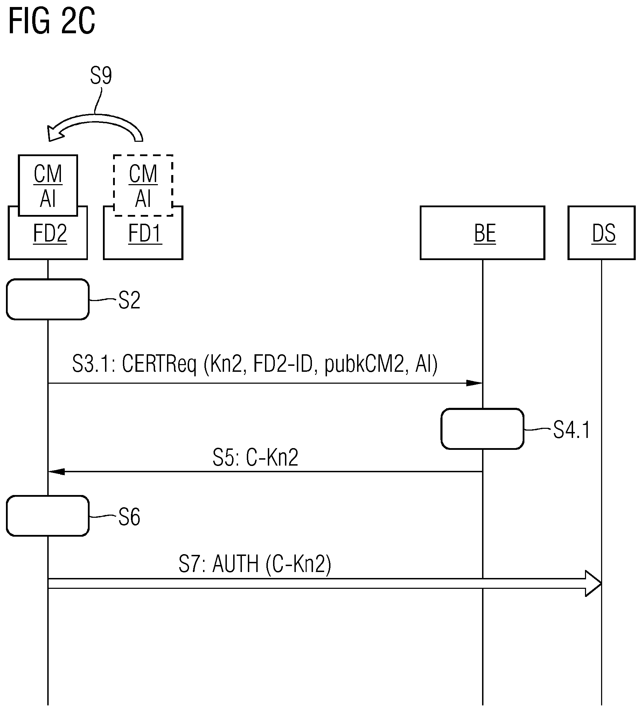

Figur 2C zeigt nun eine weitere Variante zum Widerrufen des Konfigurationsmodul-spezifischen Berechtigungsnachweises C-Kn1 nach einem Wechsel des Konfigurationsmoduls CM1 vom ersten Gerät FD1 in ein zweites Gerät FD2, siehe Verfahrensschritt S9.

Beim Auslesen des Konfigurationsmoduls CM1, siehe S2, wird zusätzlich eine Autorisierungsinformation AI ausgelesen, die ein Widerrufen des Konfigurationsmodul-spezifischen Berechtigungsnachweises C-Kn1, der für das erste Gerät FD1 ausgestellt wurde, autorisiert. Die Autorisierungsinformation AI wird in der Anforderungsnachricht CERTReq zum Anfordern eines neuen Konfigurationsmodul-spezifischen Berechtigungsnachweises C-Kn2 für das zweite Gerät FD2 an die Berechtigungsvorrichtung BE übermittelt, siehe S3.1. Die Berechtigungsvorrichtung BE identifiziert anhand der Autorisierungsinformation AI den zu widerrufenden Berechtigungsnachweis C-Kn1 des ersten Gerätes FD1 und widerruft diesen selbstständig, siehe Verfahrensschritt S4.1. Des Weiteren übermittelt die Berechtigungsvorrichtung BE den angeforderten Konfigurationsmodul-spezifischen Berechtigungsnachweis C-Kn2 für das zweite Gerät FD2 in der bereits beschriebenen Weise, siehe Verfahrensschritt S5.

Somit existiert auch in diesem Ausführungsbeispiel lediglich ein gültiger Konfigurationsmodul-spezifischen Berechtigungsnachweis. Anschließend authentisiert sich das zweite Gerät FD2 mittels des Konfigurationsmodul-spezifischen Berechtigungsnachweis C-Kn2, siehe S7.

Figur 3 beschreibt nun ein Ausführungsbeispiel eines Konfigurationsmoduls CM. Das Konfigurationsmodul CM umfasst eine Schnittstelle FDI zum Verbinden des Konfigurationsmoduls mit einem Gerät FD. Die Geräte-Schnittstelle FDI ist mit einem Speicher CMS verbunden. Der Speicher gewährt sowohl lesenden als auch schreibenden Zugang durch die Geräte-Schnittstelle FDI. Der Speicher CMS kann beispielsweise als Speicherchip ausgebildet sein. Auf dem Speicher CMS sind Informationen, beispielsweise eine Konfigurationsmodul-Identifier CM-ID, eine Konfigurationsmodul-spezifische Geräteinformation Kn, eine Gerätekennung Gn, eine Konfigurationsmodulkennung KDI, eine Widerrufsinformation RVI, eine Autorisierungsinformation AI, eine Registrierungsauthorisierungsinformation RAI, sowie weitere Konfigurationsdaten für ein Gerät abgespeichert. Die Gerätekennung Gn ist bevorzugt ein projektierter Gerätename.

In einer Variante verfügt das Konfigurationsmodul CM über ein Sicherheitselement CM-SE, um eine digitale Signatur mittels des auf dem Konfigurationsmodul CM gespeicherten privaten Konfigurationsmodulauthentisierungsschlüssels privkCMS zu bilden. Der Konfigurationsmodulauthentisierungsschlüssels privkCMS ist bevorzugt auf dem Sicherheitselement CM-SE abgespeichert.

In Figur 4 ist ein Gerät FD, beispielsweise das genannte erste oder zweite Gerät FD1, FD2 dargestellt. Das Gerät FD weist eine Steuereinheit CPU, die vorzugsweise als ein Mikroprozessor ausgebildet ist, einen Speicher RAM, eine Netzwerkschnittstelle NWIF, eine Ein-/Ausgabeschnittstelle I/O zum Verbinden von beispielsweise Sensoren und Aktoren, eine Konfigurationsmodul-Schnittstelle CMI sowie ein Sicherheitsspeicherelement SE auf.

Das Konfigurationsmodul CM umfasst Konfigurationsdaten umfassend insbesondere einen projektierbaren Gerätenamen, Gn-ID, zum Beispiel eine vorgebbare Zeichenkette. Vorzugsweise umfassen die Konfigurationsdaten weiterhin eine RegistrierungsAutorisierungsinformation, beispielsweise einen Registrierungscode, oder einen JSON Web-Token.

Das Sicherheitsspeicherelement SE ist derart ausgebildet, beispielsweise kryptographische Schlüssel sicher abzuspeichern und kryptographische Operationen durchzuführen. Das Sicherheitsspeicherelement SE kann als ein separates Hardware-Sicherheitsmodul ausgebildet sein, oder als ein integriertes sicheres Element, auch als Secure Element bezeichnet, eines "System on Chips" ausgebildet sein, bei dem neben der Steuereinheit auch ein geschützter Sicherheitsbereich vorgesehen ist. Ein solches Sicherheitsbereich auf einem "System on Chip" kann beispielsweise eine vertrauenswürdige Ausführungsumgebung (Trusted Execution Environment TEE), ein Hardware-Crypto-Engine, ein Security Guard Extension SGX oder ein integriertes Trusted Platform Module TPM sein. In einer weiteren Variante kann ein "System on Chip" einen sicheren Speicherbereich aufweisen, der z.B. durch spezielle physikalische Schutzschichten so realisiert ist, dass er auch bei geöffnetem Chipgehäuse nicht einfach auslesbar oder manipulierbar ist. Weiterhin können Tamper-Sensoren, z.B. zur Überwachung von Versorgungsspannung, Temperatur, oder Taktsignalen, und Eindringsensoren wie Lichtsensoren, Strahlungssensoren, Näherungssensoren oder ein Wire-Mesh-Sensor vorgesehen sein.

Das Sicherheitsspeicherelement SE speichert den Konfigurationsmodul-spezifischen Berechtigungsnachweis C-Kn, beispielsweise ein Gerätezertifikat und einen zugeordneten privaten Schlüssel, mit dem sich das Gerät FD authentisieren kann. Der Konfigurationsmodul-spezifischen Berechtigungsnachweis C-Kn umfasst eine feste gerätespezifische Kennung FD1-ID des ersten Gerätes FD1, beispielsweise eine Seriennummer, einen Hersteller des Gerätes, eine Gerätetypinformation oder eine Version des Geräts. Dabei können eine oder mehrere dieser Informationen im Geräte-spezifischer Berechtigungsnachweis und/oder in einem Konfigurationsmodul-spezifischen Berechtigungsnachweis C-Kn des Geräts enthalten sein.

Die Steuereinheit CPU erkennt, wenn ein Konfigurationsmodul CM mit dem Gerät FD verbunden wird, das heißt angesteckt beziehungsweise gewechselt wird. Die Steuereinheit CPU liest die gespeicherte Konfigurationsinformation aus dem Konfigurationsmodul CM aus, um davon abhängig Steuerungs- und Überwachungsaufgaben durchzuführen. Dies können beispielsweise Parameter zur Regelung des Proportionalanteils, Parameter für Integrierer, Differenzierer oder auch Projektierungsdaten für eine speicherprogrammierbare Steuerung sein.

Das Sicherheitsspeicherelement SE oder die Steuereinheit CPU des Gerätes FD ist derart ausgebildet, beim Auslesen beziehungsweise nach dem Auslesen der auf dem Konfigurationsmodul gespeicherten Informationen ein neues Konfigurationsschlüsselpaar zu generieren und eine Anfragenachricht, beispielsweise für ein digitales Zertifikat als Berechtigungsnachweis C-Kn, zu erzeugen. Die Anfragenachricht umfasst den generierten öffentlichen Schlüssel pubkCM, die gerätespezifische Gerätekennung FD1-ID und die konfigurationsspezifische Geräteinformation, insbesondere den projektierten Gerätenamen Gn-ID.

Somit kann ein erstes Gerät FD1 intern Schlüssel sowie den Konfigurationsmodul-spezifischen Berechtigungsnachweis C-Kn zur Geräteauthentisierung sicher speichern. Trotzdem kann das Gerät FD leicht getauscht werden, indem das Konfigurationsmodul CM1 in ein neues, zweites Gerät FD1 eingesteckt wird.

Alle beschriebenen oder bezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur Einrichtung eines Berechtigungsnachweises für ein erstes Gerät (FD1), wobei das erste Gerät (FD1) mittels Konfigurationsdaten, die von einem lösbar mit dem ersten Gerät (FD1) verbundenen Konfigurationsmodul (CM) auf das erste Gerät (FD1) übertragen werden, konfiguriert wird, aufweisend folgende Verfahrensschritte durchgeführt im ersten Gerät (FD1):
- Erkennen eines Verbindens (S1) des Konfigurationsmoduls (CM) mit dem ersten Gerät (FD1),
- Auslesen (S2) einer Konfigurationsmodul-spezifischen Geräteinformation (Kn) aus dem Konfigurationsmodul (CM),
- Anfordern (S3) eines Konfigurationsmodul-spezifischen Berechtigungsnachweises (C-Kn) für die Konfigurationsmodul-spezifische Geräteinformation (Kn) für das erste Gerät (FD1) bei einer Berechtigungsvorrichtung (BE),
- Abspeichern (S6) des angeforderten Konfigurationsmodul-spezifischen Berechtigungsnachweises (C-Kn) auf einer Sicherheitsspeichereinheit (SE) des ersten Geräts (FD1), wobei im Konfigurationsmodul-spezifischen Berechtigungsnachweis (C-Kn) zusätzlich eine im ersten Gerät (FD1) vorliegende Gerätespezifische Gerätekennung (FD1-ID) enthalten ist, und
wobei das erste Gerät (FD) den Konfigurationsmodul-spezifischen Berechtigungsnachweis (C-Kn) zur Authentifizierung des ersten Geräts (FD) gegenüber einem Kommunikationspartner (BS) verwendet.

2. Verfahren nach Anspruch 1, mit einem weiteren Verfahrensschritt
- Überprüfen, ob ein Konfigurationsmodul-spezifischer Berechtigungsnachweis (C-Kn) für die Konfigurationsmodul-spezifische Geräteinformation (Kn) auf dem ersten Gerät (FD1) bereits vorhanden ist, und
- Anfordern des Konfigurationsmodul-spezifischen Berechtigungsnachweises (C-Kn) lediglich dann, wenn der Konfigurationsmodul-spezifische Berechtigungsnachweis (C-Kn) für die Konfigurationsmodul-spezifische Geräteinformation (Gn) auf dem ersten Gerät (FD1) fehlt.

3. Verfahren nach einen der vorhergehenden Ansprüche, mit einem weiteren Verfahrensschritt ausgeführt vom ersten Gerät (FD1) :
- Widerrufen des Konfigurationsmodul-spezifischen Berechtigungsnachweises (C-Kn) nach einem Trennen des Konfigurationsmoduls (CM) vom ersten Gerät (FD1).

4. Verfahren nach einem der vorhergehenden Ansprüche, wobei die Konfigurationsmodul-spezifische Geräteinformation (Kn) eine auf dem Konfigurationsmodul gespeicherte Gerätekennung (Gn) oder eine auf dem Konfigurationsmodul gespeicherte Konfigurationsmodulkennung (KDI)ist.

5. Verfahren nach einem der vorhergehenden Ansprüche, wobei der Konfigurationsmodul-spezifische Berechtigungsnachweis (C-Kn) als ein digitales Zertifikat oder als Zugangstoken in Java Script Object Notation ausgebildet ist.

6. Verfahren nach einem der vorhergehenden Ansprüche, wobei das Konfigurationsmodul (CM) eine Adresse der Berechtigungsvorrichtung (BE), von der ein Konfigurationsmodul-spezifischer Berechtigungsnachweis (C-Kn) angefordert wird, speichert und dem ersten Gerät (FD1) bereitstellt.

7. Verfahren nach einem der vorhergehenden Ansprüche, wobei das erste Gerät (FD1) einen für das Konfigurationsmodul spezifischen, privaten Konfigurationsschlüssel (privkCM1) erzeugt und eine Anforderungsnachricht (CERTReq) zum Anfordern des Konfigurationsmodul-spezifischen Berechtigungsnachweises (C-Kn) mit dem Konfigurationsschlüssel (privkCM1) kryptographisch schützt.

8. Verfahren nach Anspruch 7, wobei die Anforderungsnachricht (CERTReq) zum Anfordern des Konfigurationsmodul-spezifischen Berechtigungsnachweises (C-Kn) mit einem im ersten Gerät (FD1) vorliegenden Geräte-spezifischen privaten Schlüssel (privkFD1) kryptographisch geschützt wird.

9. Verfahren nach einem der vorhergehenden Ansprüche, wobei beim Erkennen eines Trennens des Konfigurationsmoduls vom ersten Gerät (FD1) eine Widerrufanfrage zum Widerrufen des Konfigurationsmodul-spezifischen Berechtigungsnachweises (C-Kn) vom ersten Gerät (FD1) erzeugt und an die Berechtigungsvorrichtung (BE) übermittelt wird.

10. Verfahren nach einem der vorhergehenden Ansprüche, wobei nach dem Abspeichern des Konfigurationsmodul-spezifischen Berechtigungsnachweises (C-Kn) auf dem ersten Gerät (FD1), das erste Gerät (FD1) eine Widerrufinformation (RVI) dem Konfigurationsmodul (CM) bereitgestellt, und das zweite Gerät (FD2) bei einem Verbinden des Konfigurationsmoduls (CM) mit einem zweiten Gerät (FD2) abhängig von der bereitgestellten Widerrufsinformation (RVI) das Widerrufen des Konfigurationsmodul-spezifischen Berechtigungsnachweises (FD1) des ersten Gerätes (FD1)unter Verwendung der bereitgestellten Widerrufsinformation auslöst.

11. Verfahren nach Anspruch 10, wobei das zweite Gerät (FD2) eine von der Widerrufsinformation (RVI) abhängige Autorisierungsinformation (AI) mit einer Anforderungsnachricht (CERTReq) zum Anfordern eines Konfigurationsmodul-spezifischen Berechtigungsnachweises für das zweite Gerät (FD2) an die Berechtigungsvorrichtung (BE) übermittelt und die Berechtigungsvorrichtung (BE) abhängig von der Autorisierungsinformation (AI) den Konfigurationsmodul-spezifischen Berechtigungsnachweis (C-Kn) des ersten Gerätes (FD1) widerruft.

12. Verfahren nach einem der vorhergehenden Ansprüche, wobei eine Gültigkeitsdauer des Konfigurationsmodul-spezifischen Berechtigungsnachweises (C-Kn) auf eine Anzahl von Stunden, bevorzugt auf einem Tag, begrenzt wird und das erste Gerät (FD1) nach Ablauf der Gültigkeitsdauer einen neuen Konfigurationsmodul-spezifischen Berechtigungsnachweis (C-Kn) anfordert.

13. Erstes Gerät (FD1), das mittels Konfigurationsdaten, die von einem lösbar mit dem ersten Gerät (FD1) verbundenen Konfigurationsmodul (CM) auf das erste Gerät (FD1) übertragen werden, konfigurierbar ist, aufweisend:
- Verbindungseinheit, die derart ausgebildet ist, ein Verbinden eines Konfigurationsmodul (CM) mit dem ersten Gerät (FD1) zu erkennen,
- Ausleseeinheit (CMS), die derart ausgebildet ist, eine Konfigurationsmodul-spezifische Geräteinformation (Gn) aus dem Konfigurationsmodul (CM) auszulesen,
- Steuerungseinheit (CP), die derart ausgebildet ist, einen Konfigurationsmodul-spezifischen Berechtigungsnachweis (C-Kn) für die Konfigurationsmodul-spezifische Geräteinformation (Gn) für das erste Gerät (FD1) bei einer Berechtigungsvorrichtung (BE) anzufordern, und eine
- Sicherheitsspeichereinheit (SE), die derart ausgebildet ist, den von der Berechtigungsvorrichtung (BE) angeforderten Konfigurationsmodul-spezifischen Berechtigungsnachweises (C-Kn) abzuspeichern, wobei im Konfigurationsmodul-spezifischen Berechtigungsnachweis (C-Kn) zusätzlich eine im ersten Gerät (FD1) vorliegende Gerätespezifische Gerätekennung (FD1-ID) enthalten ist,
wobei das erste Gerät (FD) den Konfigurationsmodul-spezifischen Berechtigungsnachweis (C-Kn) zur Authentifizierung des ersten Geräts (FD) gegenüber einem Kommunikationspartner (BS) verwendet.

14. Erstes Gerät gemäß Anspruch 13, wobei das erste Gerät derart ausgebildet ist, das Verfahren gemäß mindestens einem der Ansprüche 1 bis 12 auszuführen.

15. Computerprogrammprodukt, das direkt in einen Speicher von mehr als einem digitalen Computer ladbar ist, umfassend Programmcodeteile, die dazu geeignet sind, die Schritte des Verfahrens nach einem der Ansprüche 1 bis 12 durchzuführen.

## Claims

1. Method for setting up a credential for a first device (FD1), wherein the first device (FD1) is configured by way of configuration data that are transmitted from a configuration module (CM), connected detachably to the first device (FD1), to the first device (FD1), having the following method steps, performed in the first device (FD1):
- recognizing connection (S1) of the configuration module (CM) to the first device (FD1),
- reading (S2) configuration module-specific device information (Kn) from the configuration module (CM),
- requesting (S3) a configuration module-specific credential (C-Kn) for the configuration module-specific device information (Kn) for the first device (FD1) at an authorization apparatus (BE),
- storing (S6) the requested configuration module-specific credential (C-Kn) on a security storage unit (SE) of the first device (FD1), wherein the configuration module-specific credential (C-Kn) additionally contains a device-specific device identifier (FD1-ID) present in the first device (FD1), and
wherein the first device (FD) uses the configuration module-specific credential (C-Kn) to authenticate the first device (FD) to a communication partner (BS).

2. Method according to Claim 1, having a further method step
- checking whether a configuration module-specific credential (C-Kn) for the configuration module-specific device information (Kn) is already present on the first device (FD1) and
- requesting the configuration module-specific credential (C-Kn) only when the configuration module-specific credential (C-Kn) for the configuration module-specific device information (Gn) is missing on the first device (FD1).

3. Method according to either of the preceding claims, having a further method step carried out by the first device (FD1):
- revoking the configuration module-specific credential (C-Kn) following disconnection of the configuration module (CM) from the first device (FD1).

4. Method according to one of the preceding claims, wherein the configuration module-specific device information (Kn) is a device identifier (Gn) stored on the configuration module or a configuration module identifier (KDI) stored on the configuration module.

5. Method according to one of the preceding claims, wherein the configuration module-specific credential (C-Kn) is formed as a digital certificate or as an access token in JavaScript Object Notation.

6. Method according to one of the preceding claims, wherein the configuration module (CM) stores an address of the authorization apparatus (BE) from which a configuration module-specific credential (C-Kn) is requested and provides it to the first device (FD1).

7. Method according to one of the preceding claims, wherein the first device (FD1) generates a private configuration key (privkCM1) specific to the configuration module and cryptographically protects a request message (CERTReq) for requesting the configuration module-specific credential (C-Kn) with the private key (privkCM1).

8. Method according to Claim 7, wherein the request message (CERTreq) for requesting the configuration module-specific credential (C-Kn) is cryptographically protected with a device-specific private key (privkFD1) present in the first device (FD1).

9. Method according to one of the preceding claims, wherein, when disconnection of the configuration module from the first device (FD1) is recognized, a revocation request to revoke the configuration module-specific credential (C-Kn) is generated by the first device (FD1) and transmitted to the authorization apparatus (BE).

10. Method according to one of the preceding claims, wherein, after the configuration module-specific credential (C-Kn) has been stored on the first device (FD1), the first device (FD1) provides revocation information (RVI) to the configuration module (CM), and the second device (FD2), when the configuration module (CM) is connected to a second device (FD2), depending on the provided revocation information (RVI), triggers the revocation of the configuration module-specific credential (FD1) of the first device (FD1) using the provided revocation information.

11. Method according to Claim 10, wherein the second device (FD2) transmits authorization information (AI) dependent on the revocation information (RVI) and containing a request message (CERTReq) for requesting a configuration module-specific credential for the second device (FD2) to the authorization apparatus (BE), and the authorization apparatus (BE) revokes the configuration module-specific credential (C-Kn) of the first device (FD1) depending on the authorization information (AI).

12. Method according to one of the preceding claims, wherein a validity duration of the configuration module-specific credential (C-Kn) is limited to a number of hours, preferably to one day, and the first device (FD1) requests a new configuration module-specific credential (C-Kn) after the validity duration has expired.

13. First device (FD1) that is able to be configured by way of configuration data that are transmitted from a configuration module (CM), connected detachably to the first device (FD1), to the first device (FD1), having:
- a connection unit that is designed to recognize connection of a configuration module (CM) to the first device (FD1),
- a reading unit (CMS) that is designed to read configuration module-specific device information (Gn) from the configuration module (CM),
- a control unit (CP) that is designed to request a configuration module-specific credential (C-Kn) for the configuration module-specific device information (Gn) for the first device (FD1) at an authorization apparatus (BE), and
- a security storage unit (SE) that is designed to store the configuration module-specific credential (C-Kn) requested from the authorization apparatus (BE), wherein the configuration module-specific credential (C-Kn) additionally contains a device-specific device identifier (FD1-ID) present in the first device (FD1),
wherein the first device (FD) uses the configuration module-specific credential (C-Kn) to authenticate the first device (FD) to a communication partner (BS).

14. First device according to Claim 13, wherein the first device is designed to carry out the method according to at least one of Claims 1 to 12.

15. Computer program product that is able to be loaded directly into a memory of more than one digital computer, comprising program code portions that are suitable for performing the steps of the method according to one of Claims 1 to 12.

## Revendications

1. Procédé d'établissement d'un certificat d'autorisation pour un premier appareil (FD1), dans lequel le premier appareil (FD1) est configuré à l'aide de données de configuration qui sont transmises depuis un module de configuration (CM), connecté de manière amovible au premier appareil (FD1), vers le premier appareil (FD1), comprenant les étapes de procédé ci-dessous mises en œuvre dans le premier appareil (FD1) et consistant à :
- détecter une connexion (S1) du module de configuration (CM) au premier appareil (FD1),
- lire (S2) des informations d'appareil (Kn) spécifiques au module de configuration à partir du module de configuration (CM),
- demander (S3) à un dispositif d'autorisation (BE) un certificat d'autorisation (C-Kn) spécifique au module de configuration pour les informations d'appareil (Kn) spécifiques au module de configuration pour le premier appareil (FD1),
- enregistrer (S6) le certificat d'autorisation (C-Kn) demandé spécifique au module de configuration dans une unité de stockage de sécurité (SE) du premier appareil (FD1), dans lequel un identificateur d'appareil (FD1-ID) spécifique à l'appareil et présent dans le premier appareil (FD1) est également inclus dans le certificat d'autorisation (C-Kn) spécifique au module de configuration, et
dans lequel le premier appareil (FD) utilise le certificat d'autorisation (C-Kn) spécifique au module de configuration pour authentifier le premier appareil (FD) auprès d'un partenaire de communication (BS).

2. Procédé selon la revendication 1, comprenant en outre les étapes supplémentaires ci-dessous consistant à :
- vérifier si un certificat d'autorisation (C-Kn) spécifique au module de configuration pour les informations d'appareil (Kn) spécifiques au module de configuration est déjà présent sur le premier appareil (FD1), et
- ne demander le certificat d'autorisation (C-Kn) spécifique au module de configuration que si le certificat d'autorisation (C-Kn) spécifique au module de configuration pour les informations d'appareil (Gn) spécifiques au module de configuration est manquant sur le premier appareil (FD1).

3. Procédé selon l'une quelconque des revendications précédentes, comprenant une étape de procédé supplémentaire mise en œuvre par le premier appareil (FD1) et consistant à :
- révoquer le certificat d'autorisation (C-Kn) spécifique au module de configuration après la déconnexion du module de configuration (CM) du premier appareil (FD1).

4. Procédé selon l'une quelconque des revendications précédentes, dans lequel les informations d'appareil (Kn) spécifiques au module de configuration sont un identifiant d'appareil (Gn) stocké sur le module de configuration ou un identifiant de module de configuration (KDI) stocké sur le module de configuration.

5. Procédé selon l'une quelconque des revendications précédentes, dans lequel le certificat d'autorisation (C-Kn) spécifique au module de configuration est conçu comme un certificat numérique ou comme un jeton d'accès en Java Script Object Notation.

6. Procédé selon l'une quelconque des revendications précédentes, dans lequel le module de configuration (CM) stocke une adresse du dispositif d'autorisation (BE), auprès duquel un certificat d'autorisation (C-Kn) spécifique au module de configuration est demandé, et la met à disposition du premier appareil (FD1).

7. Procédé selon l'une quelconque des revendications précédentes, dans lequel le premier appareil (FD1) génère une clé de configuration privée (privkCM1) spécifique au module de configuration et protège de manière cryptographique avec la clé de configuration (privkCM1) un message de demande (CERTReq) permettant de demander le certificat d'autorisation (C-Kn) spécifique au module de configuration.

8. Procédé selon la revendication 7, dans lequel le message de demande (CERTReq) permettant de demander le certificat d'autorisation (C-Kn) spécifique au module de configuration est protégé de manière cryptographique avec une clé privée (privkFD1) spécifique à l'appareil et présente dans le premier appareil (FD1).

9. Procédé selon l'une quelconque des revendications précédentes, dans lequel, lors de la détection d'une déconnexion du module de configuration du premier appareil (FD1), une demande de révocation permettant de révoquer le certificat d'autorisation (C-Kn) spécifique au module de configuration du premier appareil (FD1) est générée et transmise au dispositif d'autorisation (BE).

10. Procédé selon l'une quelconque des revendications précédentes, dans lequel, après l'enregistrement du certificat d'autorisation (C-Kn) spécifique au module de configuration sur le premier appareil (FD1), le premier appareil (FD1) fournit des informations de révocation (RVI) au module de configuration (CM), et le second appareil (FD2), lors d'une connexion du module de configuration (CM) à un second appareil (FD2), déclenche, en utilisant les informations de révocation (RVI) fournies, la révocation du certificat d'autorisation(FD1), spécifique au module de configuration, du premier appareil (FD1) en fonction des informations de révocation fournies.

11. Procédé selon la revendication 10, dans lequel le second appareil (FD2) transmet au dispositif d'autorisation (BE) des informations d'autorisation (AI) dépendantes des informations de révocation (RVI) avec un message de demande (CERTReq) permettant de demander un certificat d'autorisation spécifique au module de configuration pour le second appareil (FD2) et le dispositif d'autorisation (BE) révoque le certificat d'autorisation (C-Kn), spécifique au module de configuration, du premier appareil (FD1) en fonction des informations d'autorisation (AI).

12. Procédé selon l'une quelconque des revendications précédentes, dans lequel une durée de validité du certificat d'autorisation (C-Kn) spécifique au module de configuration est limitée à un nombre d'heures, de manière préférée à un jour, et le premier appareil (FD1) demande un nouveau certificat d'autorisation (C-Kn) spécifique au module de configuration après l'expiration de la durée de validité.

13. Premier appareil (FD1), configurable à l'aide de données de configuration transmises depuis un module de configuration (CM), connecté de manière amovible au premier appareil (FD1), vers le premier appareil (FD1), présentant :
- une unité de connexion conçue pour détecter la connexion d'un module de configuration (CM) au premier appareil (FD1),
- une unité de lecture (CMS) conçue pour lire des informations d'appareil (Gn) spécifiques au module de configuration à partir du module de configuration (CM),
- une unité de commande (CP) conçue pour demander, auprès d'un dispositif d'autorisation (BE), un certificat d'autorisation (C-Kn) spécifique au module de configuration pour les informations d'appareil (Gn) spécifiques au module de configuration pour le premier appareil (FD1), et
- une unité de stockage de sécurité (SE) conçue pour stocker le certificat d'autorisation (C-Kn) spécifique au module de configuration et demandé par le dispositif d'autorisation (BE), dans lequel le certificat d'autorisation (C-Kn) spécifique au module de configuration contient en outre un identifiant d'appareil (FD1-ID) spécifique à l'appareil et présent dans le premier appareil (FD1),
dans lequel le premier appareil (FD) utilise le certificat d'autorisation (C-Kn) spécifique au module de configuration pour authentifier le premier appareil (FD) auprès d'un partenaire de communication (BS).

14. Premier appareil selon la revendication 13, dans lequel le premier appareil est conçu pour mettre en œuvre le procédé selon au moins l'une quelconque des revendications 1 à 12.

15. Produit de programme informatique pouvant être chargé directement dans la mémoire de plusieurs ordinateurs, comprenant des parties de code de programme appropriées pour mettre en œuvre les étapes du procédé selon l'une quelconque des revendications 1 à 12.
